Europäisches Patentamt

European Patent Office

Office européen des brevets

(11) Numéro de publication: **0 159 253**
**A1**

## (12) DEMANDE DE BREVET EUROPEEN

(21) Numéro de dépôt: **85400609.5**

(22) Date de dépôt: **28.03.85**

(51) Int. Cl.⁴: **G 03 B 27/73**

(30) Priorité: **30.03.84 FR 8405596**

(43) Date de publication de la demande:
**23.10.85 Bulletin 85/43**

(84) Etats contractants désignés:
**AT BE CH DE FR GB IT LI LU NL SE**

(71) Demandeur: **Bernheim, Marc**
**34, rue Général Mangin**
**F-38100 Grenoble(FR)**

(72) Inventeur: **Bernheim, Marc**
**34, rue Général Mangin**
**F-38100 Grenoble(FR)**

(74) Mandataire: **Bloch, Gérard et al,**
**39, avenue de Friedland**
**F-75008 Paris(FR)**

(54) Procédé d'étalonnage d'un appareil de tirage pour photographies.

(57) On tire une série d'épreuves (6) à partir d'un unique negatif étalon uniforme (4). A chaque épreuve (6), on associe un vecteur de filtrage, caractéristique des réglages des taux d'intervention des filtres (21, 22) dont est pourvu l'appareil de tirage (10). On mesure, à l'aide d'un densitomètre (8) les densités optiques des épreuves révélées (7). A chaque épreuve révélée (7) on associe un vecteur d'épreuve, caractéristique des densités optiques mesurées. On détermine une bijection de l'espace des vecteurs de filtrage sur l'espace des vecteurs d'épreuve, dont on déduit le vecteur de filtrage de réglage, et les taux d'intervention de réglage. Les calculs peuvent être effectués par un microprocesseur (9), qui commande également les filtres (21, 22).

L'invention s'applique, par exemple, au tirage de photographies en couleurs.

EP 0 159 253 A1

1                    0159253

La présente invention a pour objet un procédé d'étalonnage
d'un appareil de tirage pour photographies, pourvu de
N filtres à faire intervenir, afin de déterminer les taux
d'intervention de réglage des N filtres.

Un tel procédé s'applique, par exemple, à l'étalonnage de
tireuses pour photographies en couleur.

On connaît déjà de tels procédés, manuels, où l'étalonnage
est obtenu après une série de tâtonnements : on tire une
première épreuve, à partir d'un négatif étalon correspondant à une photographie d'une couleur étalon, par exemple
un gris uniforme, et pour des réglages arbitraires des taux
d'intervention des filtres de couleur dont est pourvu la
tireuse, et on examine l'épreuve, à l'oeil ou à l'aide d'un
densitomètre, pour en déduire dans quel sens il faut modifier
les taux d'intervention de réglage. On recommence la même
étape avec les nouveaux réglages, et ainsi de suite jusqu'à
ce que le résultat soit satisfaisant.

On connait aussi des procédés automatiques, mais, en général, ils ne permettent l'étalonnage correct qu'en plusieurs
étapes et nécessitent toujours la connaissance et l'estimation de paramètres inconnus concernant en particulier le
comportement du négatif étalon, qui correspond alors à
plusieurs couleurs étalon, par exemple à une échelle de gris.

Les procédés connus sont donc longs et demandent à l'opérateur un certain doigté.

La présente invention vise à pallier ces inconvénients.

A cet effet, l'invention a pour objet un procédé d'étalonnage d'un appareil de tirage pour photographies, pour
déterminer le taux d'intervention de N filtres dont est pourvu l'appareil, dans lequel :

(a) on tire une série de P épreuves, indépendamment les unes des autres, à partir d'un unique négatif étalon correspondant à une photographie d'une couleur étalon uniforme, chaque épreuve étant tirée avec des taux d'intervention déterminés et étant associée à un vecteur de filtrage d'un espace de dimension N, dont les composantes sont les N taux d'intervention;

(b) pour chaque épreuve révélée de la série, on mesure M densités optiques dans M couleurs de base et on détermine un vecteur d'épreuve, dont les composantes sont proportionnelles aux densités optiques;

(c) on détermine une bijection de l'espace des P vecteurs de filtrage sur l'espace des P vecteurs d'épreuve, qui, à chaque vecteur de filtrage fait correspondre le vecteur d'épreuve de l'épreuve obtenue avec les taux d'intervention du vecteur de filtrage considéré;

(d) on détermine un vecteur d'épreuve d'une épreuve représentant la dite couleur étalon avec des densités optiques souhaitées à priori, puis on détermine le vecteur de filtrage de réglage qui, dans la bijection précédente, correspond à ce vecteur d'épreuve;

(e) on règle la tireuse avec les taux d'intervention de réglage du vecteur de filtrage de réglage précédent.

Le procédé de l'invention ne nécessite donc aucun tâtonnement et ne demande à l'opérateur aucun doigté particulier. Il ne comprend qu'une seule étape, puisque toutes les épreuves de la série sont tirées puis révélées pratiquement simultanément. Donc la durée d'obtention de la série de P épreuves est du même ordre de grandeur que la durée d'obtention d'une seule épreuve, ou étape. De plus, le négatif étalon utilisé, de couleur uniforme, est d'un type plus simple qu'un négatif correspondant à une échelle de gris.

Avantageusement, après avoir mesuré M densités optiques dans M couleurs de base, on détermine un vecteur d'épreuve d'un espace de dimension M-1, dont les composantes, exprimées relativement à la densité optique d'une couleur de référence, sont les M-1 densités optiques relatives des M-1 autres couleurs.

Le traitement ultérieur de ces vecteurs en est ainsi facilité.

Avantageusement encore, on tire une série de plus de deux épreuves, chaque épreuve étant tirée avec au moins deux taux d'interventions déterminés.

Le procédé permet alors l'étalonnage d'un appareil de tirage pour la reproduction de l'ensemble des couleurs du spectre chromatique naturel.

Avantageusement encore, on tire une série de trois épreuves, chaque épreuve étant tirée avec deux taux d'intervention déterminés, pour chaque épreuve de la série on mesure trois densités optiques dans trois couleurs de base, et on détermine la bijection par interpolation linéaire, à l'aide d'un modèle du premier ordre.

La phase (c) de détermination de la bijection est alors relativement simple, et facile à programmer sur un calculateur, et elle donne lieu à des calculs rapides.

Enfin, dans une autre mise en oeuvre du procédé de l'invention, on tire une série de quatre épreuves, chaque épreuve étant tirée avec deux taux d'intervention déterminés, pour chaque épreuve de la série on mesure trois densités optiques dans trois couleurs de base, et on détermine la bijection à l'aide d'un modèle du second ordre.

La précision des réglages obtenus dans la phase (e) est alors accrue.

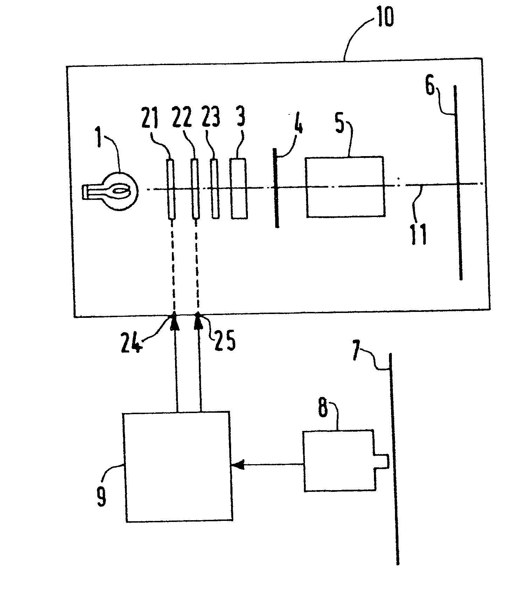

L'invention sera mieux comprise à l'aide de la description suivante de deux mises en oeuvre préférées du procédé selon l'invention, faite en se référant au dessin annexé, sur lequel l'unique figure représente un schéma par blocs de l'appareillage utilisé.

Décrivons d'abord l'appareillage utilisé.

En se référant à la figure, l'appareil à tirer, ou tireuse 10, comprend, le long d'un axe optique 11 et disposés dans cet ordre :

- un dispositif d'exposition, en l'occurrence une lampe 1,
- ici trois filtres de couleur jaune 21, magenta 22 et cyan 23,
- un mélangeur de lumière 3, pour donner en sortie un faisceau lumineux de teinte uniforme, même si le faisceau lumineux en entrée n'est pas spatialement de teinte uniforme,
- un négatif 4,
- une optique 5 pour former une image du négatif sur une épreuve impressionnable 6,
- l'épreuve 6.

Un densitomètre 8 peut mesurer les densités optiques dans les trois couleurs de base conventionnelles rouge, verte

5 0159253

et bleue d'un objet, en l'occurrence, une épreuve révélée 7.

Le densitomètre 8 est relié à un microprocesseur 9, lui-même relié, ici, à deux bornes d'entrée 24 et 25 de la tireuse 10, agencée pour que les taux d'intervention des filtres jaune 21 et magenta 22 soient programmables à l'aide de signaux électriques appliqués sur les entrées 24 et 25, respectivement.

Le taux d'intervention des filtres peut être spatial, ou temporel. Dans le cas d'un taux d'intervention spatial, le filtre est disposé pour intercepter une partie plus ou moins grande du faisceau lumineux, le mélangeur de lumière uniformisant, en sortie, la teinte obtenue. Dans le cas d'un taux d'intervention temporel, le filtre intercepte la totalité du faisceau, mais pendant un temps plus ou moins grand.

Avant de décrire les mises en oeuvre du procédé selon l'invention, rappelons la définition mathématique d'une bijection, qui sera utile dans la suite.

Etant donné deux ensembles A et B, si, à tout élément a de l'ensemble A, on fait correspondre un élément et un seul b de l'ensemble B, et réciproquement, on dit que la correspondance est une application biunivoque ou bijection de l'ensemble A, sur l'ensemble B, ou de l'ensemble B sur l'ensemble A.

Dans une première mise en oeuvre du procédé selon l'invention, on procède comme suit :

ⓐ on place un négatif étalon 4, correspondant à une photographie d'une couleur étalon uniforme, dans la tireuse, et on impressionne une série de trois épreuves telles que l'épreuve 6, correspondant à des taux d'intervention des filtres $f_J^{(i)}$ et $f_M^{(i)}$ pour les filtres jaune et magenta de la $i^{\text{ème}}$ épreuve, respectivement. A chaque épreuve on associe un vecteur de filtrage $\vec{F}^{(i)}$, représenté par la matrice colonne $F^{(i)}$

$$F^{(i)} = \begin{bmatrix} f_J^{(i)} \\ f_M^{(i)} \end{bmatrix}$$

(b) les trois épreuves révélées, telles que 7, sont analysées à l'aide du densitomètre, qui en mesure les densités optiques $d_R^{(i)}$, $d_V^{(i)}$ et $d_B^{(i)}$ respectivement pour les couleurs de base rouge, verte et bleue de la $i^{\text{ème}}$ épreuve, respectivement. Pour chaque épreuve révélée, on détermine ainsi un vecteur d'épreuve $\vec{D}^{(i)}$ représenté par la matrice colonne $D^{(i)}$

$$D^{(i)} = \begin{bmatrix} d_R^{(i)} \\ d_V^{(i)} \\ d_B^{(i)} \end{bmatrix}$$

(c) on détermine la bijection de l'espace des trois vecteurs de filtrage $\vec{F}^{(i)}$ sur l'espace des trois vecteurs d'épreuve $\vec{D}^{(i)}$, à l'aide d'un modèle aux différences du premier ordre en $\vec{F}$, ou interpolation linéaire, en calculant la matrice K telle que :

$$(D^{(i)} - D^{(1)}) = K (F^{(i)} - F^{(1)})$$

où i = 2 et 3, la première épreuve étant l'épreuve servant de référence.

La matrice K est une matrice à trois lignes et deux colonnes, dont les éléments $k_{IL}$ (I = R, V, B et L = J, M) sont solutions du système linéaire de six équations à six inconnues suivant :

$$k_{RJ}\left(f_J^{(2)}-f_J^{(1)}\right) + k_{RM}\left(f_M^{(2)}-f_M^{(1)}\right) = d_R^{(2)}-d_R^{(1)}$$

$$k_{VJ}\left(f_J^{(2)}-f_J^{(1)}\right) + k_{VM}\left(f_M^{(2)}-f_M^{(1)}\right) = d_V^{(2)}-d_V^{(1)}$$

$$k_{BJ}\left(f_J^{(2)}-f_J^{(1)}\right) + k_{BM}\left(f_M^{(2)}-f_M^{(1)}\right) = d_B^{(2)}-d_B^{(1)}$$

$$k_{RJ}\left(f_J^{(3)}-f_J^{(1)}\right) + k_{RM}\left(f_M^{(3)}-f_M^{(1)}\right) = d_R^{(3)}-d_R^{(1)}$$

$$k_{VJ}\left(f_J^{(3)}-f_J^{(1)}\right) + k_{VM}\left(f_M^{(3)}-f_M^{(1)}\right) = d_V^{(3)}-d_V^{(1)}$$

$$k_{BJ}\left(f_J^{(3)}-f_J^{(1)}\right) + k_{BM}\left(f_M^{(3)}-f_M^{(1)}\right) = d_B^{(3)}-d_B^{(1)}$$

ⓓ On détermine le vecteur de filtrage de réglage $\vec{F}^{(r)}$ qui, dans la bijection précédente, correspond au vecteur d'épreuve $\vec{D}^{(r)}$ dont la première composante est 1 et dont les composantes suivantes, $\frac{1}{\alpha}$ et $\frac{1}{\beta}$ respectivement, sont les composantes d'un vecteur d'épreuve $\vec{D}_o^{(r)}$ d'un espace de dimension deux, dont les composantes sont les deux densités optiques relatives $\frac{1}{\alpha}$ et $\frac{1}{\beta}$ des deux couleurs verte $d_V$ et bleue $d_B$ exprimées relativement à la densité optique $d_R$ de la première couleur rouge, pour une épreuve représentant la dite couleur étalon avec les densités optiques $d_R$, $d_V$, $d_B$, souhaitées à priori.

$$D^{(r)} = \begin{bmatrix} 1 \\ 1/\alpha \\ 1/\beta \end{bmatrix} \qquad D_o^{(r)} = \begin{bmatrix} 1/\alpha \\ 1/\beta \end{bmatrix} \qquad \frac{1}{\alpha} = \frac{d_V}{d_R} \qquad \frac{1}{\beta} = \frac{d_B}{d_R}$$

Le vecteur de filtrage de réglage est, d'une manière générale, déterminé par la relation :

$$d_R D^{(r)} - D^{(1)} = K (F^{(r)} - F^{(1)})$$

Les composantes $f_J$ et $f_M$ du vecteur de filtrage de réglage $\vec{F}^{(r)}$, taux d'intervention de réglage des filtres jaune et magenta sont solutions du système linéaire de deux équations à deux inconnues :

$$d_R^{(1)} - \alpha d_V^{(1)} + (k_{RJ} - \alpha k_{VJ})\times(f_J - f_J^{(1)}) + (k_{RM} - \alpha k_{VM})\times(f_M - f_M^{(1)}) = 0$$

$$d_R^{(1)} - \beta d_B^{(1)} + (k_{RJ} - \beta k_{BJ})\times(f_J - f_J^{(1)}) + (k_{RM} - \beta k_{BM})\times(f_M - f_M^{(1)}) = 0$$

Le calcul de $f_J$ et $f_M$ est effectué, conformément aux équations ci-dessus, par le microprocesseur 9.

ⓔ le microprocesseur 9 commande, par des signaux appliqués sur les bornes 24 et 25, le réglage des filtres, aux taux d'intervention de réglage $f_J$ et $f_M$ pour l'étalonnage définitif de la tireuse, qui a été obtenu en une seule étape.

Dans une deuxième mise en oeuvre du procédé selon l'invention, on procède comme suit :

ⓐ on tire quatre épreuves, au lieu des trois précédentes. On obtient alors quatre vecteurs de filtrage $\vec{F}^{(i)}$

ⓑ on détermine alors quatre vecteurs d'épreuve $\vec{D}^{(i)}$

ⓒ la bijection de l'espace des quatre vecteurs de filtrage $\vec{F}^{(i)}$ sur l'espace des quatre vecteurs d'épreuve $\vec{D}^{(i)}$ est déterminée, à l'aide d'un modèle aux différences du second ordre en $\vec{F}$, en calculant les matrices K et K' telles que

$$(D^{(i)} - D^{(1)}) = K(F^{(i)} - F^{(1)}) + K'\ (F_2^{(i,1)})$$

où     i = 2, 3 et 4, la première épreuve étant l'épreuve servant de référence, et où :

- la matrice K est une matrice à trois lignes et deux colonnes dont les éléments sont $k_{IL}$ (I= R, V, B et L = J, M),

- la matrice K' est une matrice colonne à trois éléments $k_{RJM}$, $k_{VJM}$ et $k_{BJM}$ , et

- le terme $F_2^{(i,1)}$ est un scalaire qui vaut

$$F_2^{(i,1)} = (f_J^{(i)} - f_J^{(1)}) \times (f_M^{(i)} - f_M^{(1)})$$

Les six paramètres $k_{IL}$ et les trois paramètres $k_{RJM}$, $k_{VJM}$ et $k_{BJM}$ sont solutions du système linéaire de neuf équations à neuf inconnues suivant  : (Voir page 13).

ⓓ   On détermine comme précédemment le vecteur de filtrage de réglage $\vec{F}^{(r)}$, à l'aide de la formule :

$$d_R D^{(r)} - D^{(1)} = K\ (F^{(r)} - F^{(1)}) + K'\ (F_2^{(r,1)})$$

Les composantes $f_J$ et $f_M$ sont solutions du système de deux équations à deux inconnues :

$$d_R^{(1)} - \alpha . d_V^{(1)} + (k_{RJ} - \alpha . k_{VJ}) \times (f_J - f_J^{(1)}) + (k_{RM} - \alpha . k_{VM}) \times (f_M - f_M^{(1)})$$
$$+ \left[ (k_{RJM} - \alpha . k_{VJM}) \times (f_J - f_J^{(1)}) \times (f_M - f_M^{(1)}) \right] = 0$$

$$d_R^{(1)} - \beta . d_B^{(1)} + (k_{RJ} - \beta . k_{BJ}) \times (f_J - f_J^{(1)}) + (k_{RM} - \beta . k_{BM}) \times (f_M - f_M^{(1)})$$
$$+ \left[ (k_{RJM} - \beta . k_{BJM}) \times (f_J - f_J^{(1)}) \times (f_M - f_M^{(1)}) \right] = 0$$

Ce système est avantageusement résolu, par une méthode iterative du type Newton, adaptée à la résolution de systèmes d'équations non-linéaires (en partant de l'approximée $f_J^{(1)}$, $f_M^{(1)}$).

e) cette phase est analogue à la précédente, mais la précision des résultats obtenus en ce qui concerne les valeurs de $f_J$ et $f_M$ est accrue.

Dans la description qui vient d'être faite des deux mises en oeuvre préférées du procédé de l'invention, la première épreuve était l'épreuve servant de référence. Bien entendu, la seconde épreuve, ou toute autre, peut être choisie comme épreuve de référence.

Avantageusement, on simplifie les calculs en choisissant :

$$f_J^{(2)} = f_J^{(1)} + D_J$$
$$f_M^{(2)} = f_M^{(1)}$$
$$f_J^{(3)} = f_J^{(1)}$$
$$f_M^{(3)} = f_J^{(1)} + D_M$$

et éventuellement :

$$f_J^{(4)} = f_J^{(1)} + D'_J$$
$$f_M^{(4)} = f_M^{(1)} + D'_M$$

Ainsi, on évite l'inversion d'une matrice pour le calcul des coefficients des matrices K et K'.

Avantageusement encore, on améliore la précision du résultat si ces taux sont choisis suffisamment différents pour encadrer les taux de réglages inconnus.

Les filtres qui servent ici à effectuer le tirage sont les filtres jaune et magenta, mais ceci n'est pas obligatoire, et la tireuse étant pourvue également d'un filtre cyan, on peut choisir les filtres jaunes et cyan, cyan et magenta, ou même utiliser les trois réglages de filtre, à condition d'effectuer alors un nombre suffisant d'épreuves.

Naturellement, le procédé de l'invention peut être utilisé pour le tirage en noir et blanc, ou en une seule couleur, ou encore à deux couleurs seulement.

En outre, dans les deux mises en oeuvre décrites, on utilise un vecteur d'épreuve à deux dimensions, dont les éléments sont les densités de couleur exprimées relativement à une couleur de référence, lors de la phase ⓓ de détermination du vecteur d'épreuve de la couleur étalon. Il est possible, également, d'utiliser de tels vecteurs lors de la phase ⓑ de détermination des vecteurs d'épreuve de la série d'épreuves.

Encore, dans la description qui vient d'être faite, on a mentionné un négatif étalon de couleur uniforme. Il est clair que le négatif étalon peut également être non uniforme, et que l'on ne s'intéressera, alors, qu'à une plage restreinte uniforme de ce négatif.

Encore, lorsque le nombre N d'épreuves est choisi, on peut décider de déterminer la bijection en prenant un modèle du plus haut degré possible en $\vec{F}$, compte tenu de la valeur de N, ou alors conserver un modèle de plus bas degré pour lequel les coefficients k identifiés (selon la méthode de la pseudo-inverse, par exemple) seront identifiés avec plus de précision, dans ce cas, qu'avec le nombre minimal d'épreuves nécessaire pour ce modèle de plus bas degré considéré.

Enfin, il est également possible de procéder à des iterations sur la méthode décrite, en prenant,dans chaque étape ultérieure, une épreuve de référence obtenue avec les taux d'intervention définis par le vecteur de filtrage de réglage de l'étape précédente.

$$k_{RJ}\,(f_J^{(2)}-f_J^{(1)}) + k_{RM}\,(f_M^{(2)}-f_M^{(1)}) + k_{RJM}\,(f_J^{(2)}-f_J^{(1)}) \times (f_M^{(2)}-f_M^{(1)}) = d_R^{(2)}-d_R^{(1)}$$

$$k_{VJ}\,(f_J^{(2)}-f_J^{(1)}) + k_{VM}\,(f_M^{(2)}-f_M^{(1)}) + k_{VJM}\,(f_J^{(2)}-f_J^{(1)}) \times (f_M^{(2)}-f_M^{(1)}) = d_V^{(2)}-d_V^{(1)}$$

$$k_{BJ}\,(f_J^{(2)}-f_J^{(1)}) + k_{BM}\,(f_M^{(2)}-f_M^{(1)}) + k_{BJM}\,(f_J^{(2)}-f_J^{(1)}) \times (f_M^{(2)}-f_M^{(1)}) = d_B^{(2)}-d_B^{(1)}$$

$$k_{RJ}\,(f_J^{(3)}-f_J^{(1)}) + k_{RM}\,(f_M^{(3)}-f_M^{(1)}) + k_{RJM}\,(f_J^{(3)}-f_J^{(1)}) \times (f_M^{(3)}-f_M^{(1)}) = d_R^{(3)}-d_R^{(1)}$$

$$k_{VJ}\,(f_J^{(3)}-f_J^{(1)}) + k_{VM}\,(f_M^{(3)}-f_M^{(1)}) + k_{VJM}\,(f_J^{(3)}-f_J^{(1)}) \times (f_M^{(3)}-f_M^{(1)}) = d_V^{(3)}-d_V^{(1)}$$

$$k_{BJ}\,(f_J^{(3)}-f_J^{(1)}) + k_{BM}\,(f_M^{(3)}-f_M^{(1)}) + k_{BJM}\,(f_J^{(3)}-f_J^{(1)}) \times (f_M^{(3)}-f_M^{(1)}) = d_B^{(3)}-d_B^{(1)}$$

$$k_{RJ}\,(f_J^{(4)}-f_J^{(1)}) + k_{RM}\,(f_M^{(4)}-f_M^{(1)}) + k_{RJM}\,(f_J^{(4)}-f_J^{(1)}) \times (f_M^{(4)}-f_M^{(1)}) = d_R^{(4)}-d_R^{(1)}$$

$$k_{VJ}\,(f_J^{(4)}-f_J^{(1)}) + k_{VM}\,(f_M^{(4)}-f_M^{(1)}) + k_{VJM}\,(f_J^{(4)}-f_J^{(1)}) \times (f_M^{(4)}-f_M^{(1)}) = d_V^{(4)}-d_V^{(1)}$$

$$k_{BJ}\,(f_J^{(4)}-f_J^{(1)}) + k_{BM}\,(f_M^{(4)}-f_M^{(1)}) + k_{BJM}\,(f_J^{(4)}-f_J^{(1)}) \times (f_M^{(4)}-f_M^{(1)}) = d_B^{(4)}-d_B^{(1)}$$

0159253

Revendications

1. Procédé d'étalonnage d'un appareil de tirage pour photographies, pour déterminer le taux d'intervention de N filtres (21, 22) dont est pourvu l'appareil, dans lequel :

(a) on tire une série de P épreuves (6), indépendamment les unes des autres, à partir d'un unique négatif étalon (4) correspondant à une photographie d'une couleur étalon uniforme, chaque épreuve étant tirée avec des taux d'intervention $(f^{(i)}_J, f^{(i)}_M)$ déterminés et étant associée à un vecteur de filtrage $(\overrightarrow{F}^{(i)})$ d'un espace de dimension N, dont les composantes sont les N taux d'intervention $(f^{(i)}_J, f^{(i)}_M)$.

(b) pour chaque épreuve révélée (7) de la série, on mesure M densités optiques $(d^{(i)}_R, d^{(i)}_V, d^{(i)}_B)$ dans M couleurs de base et on détermine un vecteur d'épreuve $(\overrightarrow{D}^{(i)})$, dont les composantes sont proportionnelles aux densités optiques $(d^{(i)}_R, d^{(i)}_V, d^{(i)}_B)$.

(c) on détermine une bijection de l'espace des P vecteurs de filtrage sur l'espace des P vecteurs d'épreuve, qui, à chaque vecteur de filtrage $(\overrightarrow{F}^{(i)})$ fait correspondre le vecteur d'épreuve $(\overrightarrow{D}^{(i)})$ de l'épreuve obtenue avec les taux d'intervention du vecteur de filtrage $(\overrightarrow{F}^{(i)})$ considéré.

(d) on détermine un vecteur d'épreuve $(\overrightarrow{D}^{(r)})$ d'une épreuve représentant la dite couleur étalon avec les densités optiques souhaitées à priori, puis on détermine le vecteur de filtrage de réglage $(\overrightarrow{F}^{(r)})$ qui, dans la bijection précédente, correspond à ce vecteur d'épreuve $(\overrightarrow{D}^{(r)})$.

(e) on règle la tireuse avec les taux d'intervention $(f_J, f_M)$ de réglage du vecteur de filtrage de réglage $(\overrightarrow{F}^{(r)})$ précédent.

2. Procédé d'étalonnage d'un appareil de tirage pour photographies selon la revendication 1, dans lequel, après avoir mesuré M densités optiques ($d_R^{(i)}$, $d_V^{(i)}$, $d_B^{(i)}$) dans M couleurs de base, on détermine un vecteur d'épreuve d'un espace de dimension M-1, dont les composantes, exprimées relativement à la densité optique d'une couleur de référence, sont les M-1 densités optiques relatives des M-1 autres couleurs.

3. Procédé d'étalonnage d'un appareil de tirage pour photographies selon la revendication 1, dans lequel, après avoir mesuré M densités optiques ($d_R^{(i)}$, $d_V^{(i)}$, $d_B^{(i)}$) dans M couleurs de base, on détermine un vecteur d'épreuve ($\vec{D}^{(i)}$) dont les composantes sont égales aux densités optiques ($d_R^{(i)}$, $d_V^{(i)}$, $d_B^{(i)}$), et après avoir déterminé la bijection, on détermine un vecteur d'épreuve ($\vec{D}^{(r)}$) d'une épreuve représentant la dite couleur étalon avec les densités optiques souhaitées à priori , dont la première composante est 1, et les compo-santes suivantes ($\frac{1}{\alpha}$ , $\frac{1}{\beta}$ ) sont les composantes d'un vecteur d'épreuve ($\vec{D}_o^{(r)}$) d'un espace de dimension M-1 dont les composantes, exprimées relativement à la densité optique ($d_R$) de la première couleur de base, sont les M-1 densités opti-ques relatives souhaitées ($\frac{1}{\alpha}$ , $\frac{1}{\beta}$) des M-1 autres couleurs de base de la dite couleur étalon.

4. Procédé d'étalonnage d'un appareil de tirage pour photographies selon l'une des revendications 1 à 3, dans lequel on tire une série de plus de deux épreuves, chaque épreuve étant tirée avec au moins deux taux d'interventions déterminés.

5. Procédé d'étalonnage d'un appareil de tirage pour photographies selon l'une des revendications 1 à 4, dans lequel on tire une série de trois épreuves, chaque épreuve étant tirée avec deux taux d'intervention ($f_J^{(i)}$, $f_M^{(i)}$) déterminés, pour chaque épreuve de la série, on mesure trois densités optiques ($d_R^{(i)}$, $d_V^{(i)}$, $d_B^{(i)}$) dans trois couleurs de base, et on détermine la bijection par interpolation linéaire, à l'aide d'un modèle du premier ordre.

6. Procédé d'étalonnage d'un appareil de tirage pour photographies selon l'une des revendications 1 à 4, dans lequel on tire une série de quatre épreuves, chaque épreuve étant tirée avec deux taux d'intervention $(f^{(i)}_J, f^{(i)}_M)$ déterminés, pour chaque épreuve de la série, on mesure trois densités optiques $(d^{(i)}_R, d^{(i)}_V, d^{(i)}_B)$ dans trois couleurs de base, et on détermine la bijection à l'aide d'un modèle du second ordre.

7. Procédé d'étalonnage d'un appareil de tirage pour photographies selon l'une des revendications 5 et 6, dans lequel on tire la deuxième épreuve avec des taux d'intervention $(f^{(2)}_J, f^{(2)}_M)$ identiques, à un incrément $(D_J)$ près sur le premier taux, aux taux $(f^{(1)}_J, f^{(1)}_M)$ avec lesquels on a tiré la première épreuve, et on tire la troisième épreuve avec des taux $(f^{(3)}_J, f^{(3)}_M)$ identiques, à un incrément $(D_M)$ près sur le deuxième taux, aux taux $(f^{(1)}_J, f^{(1)}_M)$ avec lesquels on a tiré la première épreuve.

8. Procédé d'étalonnage d'un appareil de tirage pour photographies selon l'une des revendications 5 à 7 dans lequel on tire une série d'épreuves, chaque épreuve étant tirée avec un taux d'intervention $(f^{(i)}_J)$ d'un filtre jaune et un taux d'intervention $(f^{(i)}_M)$ d'un filtre magenta, respectivement déterminés.

1/1

Office européen
des brevets

## RAPPORT DE RECHERCHE EUROPEENNE

EP  85 40 0609

### DOCUMENTS CONSIDERES COMME PERTINENTS

| Catégorie | Citation du document avec indication en cas de besoin des parties pertinentes | Revendication concernee | CLASSEMENT DE LA DEMANDE (Int. Cl 4) |
|---|---|---|---|
| A | EP-A-0 020 855 (AGFA-GEVAERT AG) * Pages 4-13; figures 1-4 * | 1 | G 03 B 27/73 |
| A | US-A-4 104 069 (J.L. VANHEERENTALS) * Colonnes 2-7; figures 1-5 * | 1 | |
| A | EP-A-0 003 310 (AGFA-GEVAERT AG) * Pages 4-19; figures 1-3 * | 1 | |
| A | US-A-4 087 180 (R.F. DINATALE) * Colonnes 2-6; figures 1-14 * | 1 | |
| A | US-A-4 167 327 (R.J. DiNATALE) * Colonnes 2-7; figures 1-9 * | 1 | DOMAINES TECHNIQUES RECHERCHES (Int. Cl.4) |
| A | US-A-4 174 173 (J. PONE) * Colonnes 2-4; figures 1,2 * | 1 | G 03 B 27/73 G 03 B 27/72 |

Le present rapport de recherche a ete etabli pour toutes les revendications

| Lieu de la recherche | Date d'achèvement de la recherche | Examinateur |
|---|---|---|
| LA HAYE | 09-07-1985 | BOEYKENS J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-ecrite
P : document intercalaire

T : théorie ou principe à la base de l'invention
E : document de brevet anterieur, mais publié à la date de dépôt ou après cette date
D : cité dans la demande
L : cité pour d'autres raisons

& : membre de la même famille, document correspondant

OEB Form 1503 03 82